# EUROPÄISCHE PATENTSCHRIFT

(11) **EP 1 900 499 B1**
(45) Veröffentlichungstag und Bekanntmachung des Hinweises auf die Patenterteilung: **26.10.2011**
(21) Anmeldenummer: 07021514.0
(22) Anmeldetag: 20.02.2004
(51) Int. Cl.: B29C 65/08, B06B 3/00

(54) **Vorrichtung zum kontinuierlichen Verbinden und/oder Verfestigen von Materialbahnen mittels Ultraschall**
Apparatus for continuously bonding and/or consolidating of web material by ultrasonics
Appareil pour la liaison et/ou la consolidation en continu de matériaux en bandes par ultrasons

(30) Priorität: 13.08.2003 DE 10337740; 11.09.2003 DE 10343325
(43) Veröffentlichungstag der Anmeldung: 19.03.2008
(62) Teilanmeldung aus: 04400007.3
(73) Patentinhaber: Herrmann Ultraschalltechnik GmbH & Co. KG, 76307 Karlsbad-Ittersbach (DE)
(72) Erfinder: Schneider, Arnold, 76275 Ettlingen-Schuttenbach (DE)
(74) Vertreter: Steimle, Josef

(56) Entgegenhaltungen:
- EP-A2- 1 114 890
- WO-A-01/94099
- WO-A-97/27005
- CH-A5- 673 128
- DE-A1- 1 425 902
- DE-A1- 2 944 080
- DE-A1- 10 201 381
- US-A- 2 762 295
- US-A- 5 096 532
- US-A- 5 645 681
- US-A- 5 707 483
- US-A1- 2002 056 589

## Beschreibung

Die Erfindung betrifft eine Vorrichtung zum kontinuierlichen Verbinden und/oder Verfestigen von Materialbahnen mittels Ultraschall.

Es ist bekannt, dass zum kontinuierlichen Verfestigen und/oder Verbinden von Materialbahnen diese zwischen einer rotierenden Walze und einer feststehenden oder ebenfalls rotierenden Sonotrode hindurchgeführt und dabei bearbeitet werden. Bei feststehenden Sonotroden können große Materialbreiten abgedeckt werden, jedoch entsteht zwischen der Sonotrode und der bewegten Materialbahn eine Reibkraft, die sich negativ auf das Schweißergebnis auswirkt. Außerdem bedingt die Reibkraft sowohl eine Erwärmung der Materialbahnen als auch eine Erwärmung der Sonotrode, wodurch der eingestellte Spalt verändert wird.

Mit rotierenden Sonotroden kann zwar der oben beschriebene Nachteil der Reibung verhindert werden, jedoch sind nur geringe Schweißbreiten realisierbar. Aus der US 2002/0130157 A1, US 5,707,483 und der US 6,547,903 ist jeweils eine Sonotrode mit einer Breite bekannt, die kleiner als Lambda halbe ist.

Aus der US 2002/0056589 A1 ist gemäß dem Oberbegriff des Anspruchs 1 eine rotierende Walze als Sonotrode bekannt, welche hülsenförmig ausgebildet ist und die Innenwand der Hülse im mittleren Bereich eine größere Dicke aufweist, als in den Randbereichen. Hierdurch soll eine über die Länge der Walze gleichmäßige radiale Schwingbewegung erreicht werden. Die DE 29 44 080 A1 offenbart eine walzenförmige Sonotrode, die mit Umfangsnuten versehen ist, so dass die zwischen den Nuten liegenden Rändelungen die Arbeitsflächen bilden.

Die US 5,096,532 A1 zeigt eine walzenförmige Sonotrode, die mit Umfangsnuten oder mit Umfangswülsten versehen ist.

Der Erfindung liegt daher die Aufgabe zugrunde, eine Vorrichtung zum kontinuierlichen Verfestigen und/oder Verbinden von Materialbahnen bereit zu stellen, mit der auch breite Materialbahnen bearbeitet werden können.

Diese Aufgabe wird mit einer Vorrichtung gelöst, die die Merkmale des Anspruchs 1 aufweist.

Erfindungsgemäß ist der Außendurchmesser (D) der rotierenden Walze teilweise eingeschnürt, wobei insbesondere die Einschnürung (E) betragsmäßig einem Teil einer Lambda-halbe Welle der aufgezwungenen Schwingung entspricht (E = |x|·λ/2). Im schwingenden Zustand nimmt die rotierende Walze dann zeitweise die Zylinderform an, wodurch eine bessere Druckverteilung erreicht wird.

Vorteilhaft ist die rotierende Walze im Außendurchmesser derart aufgedickt, dass sich eine gleichmäßige Anpresskraftverteilung über deren Länge ergibt. Diese Maßnahme trägt ebenfalls zu einer Vergleichmäßigung der Druckverteilung über die gesamte Walzenlänge bei, da die Verformung der Walze durch die Anpresskraft kompensiert wird. Insbesondere wird dies dadurch erreicht, dass die rotierende Walze eine Bombage aufweist. Die Durchmesseränderung der rotierenden Walze entspricht dabei exakt der Biegelinie.

Bei der Vorrichtung besitzt die als rotierende Walze ausgebildete Sonotrode eine Länge, die Lambda-halbe entspricht oder einem Vielfachen von Lambda-halbe der aufgezwungenen Schwingung ist. Die Länge der rotierenden Walze hängt somit im Wesentlichen vom eingesetzten Material und der gewünschten Arbeitsfrequenz ab. Durch die Vervielfachung der Länge der rotierenden Walze auf ein Vielfaches von Lambda-halbe der Schwingung können auch sehr breite Materialbahnen bearbeitet werden, ohne dass hierfür mehrere einzelne Sonotroden verwendet werden müssten. Mit der erfindungsgemäßen Vorrichtung können die Materialbahnen auch getrocknet werden.

Bei einer Weiterbildung ist vorgesehen, dass zwischen dem Amplitudentransformationsstück und der rotierenden Walze Radiallager vorgesehen sind. Diese Radiallager sind insbesondere in einem Schwingungsknoten der Longitudinalschwingung angeordnet, sodass keine oder vernachlässigbar geringe Schwingungsamplituden auf die Lager wirken.

Mit Vorzug sind beidseits der rotierenden Walze ein Amplitudentransformationsstück und ein Ultraschallkonverter vorgesehen. Abhängig von der benötigten Energie, mit deren die Materialbahnen verfestigt oder miteinander verbunden werden sollen, kann entweder ein Konverter oder können zwei Konverter vorgesehen sein, wobei die Amplitudentransformationsstücke auswechselbar angeordnet, insbesondere eingeschraubt sind. Sie können aus dem gleichen Material bestehen, wie die rotierende Walze.

Bei einem Ausführungsbeispiel sind die beiden Amplitudentransformationsstücke und die Walze in einem einzigen Bauteil vereint. Hierdurch werden höhere Festigkeiten erzeugt und es besteht keine Gefahr, dass sich die Amplitudentransformationsstücke von der Walze lösen.

Mit Vorzug ist das Gegendruckwerkzeug eine rotierende Gegendruckwalze. Zwei gegenläufige Walzen bieten den Vorteil, dass die Reibung auf ein Minimum begrenzt wird und dass die Materialbahnen sehr schonend behandelt werden, ohne dass die Bearbeitung zu Formatänderungen führt.

Eine Variante sieht vor, dass die Gegendruckwalze als aktive Walze ausgebildet ist und zwei Amplitudentransformationsstücke und wenigstens einen Konverter aufweist. Dabei besitzt jede Walze ihren eigenen Konverter.

Dabei kann die Außenoberfläche entweder der rotierenden Walze oder der Gegendruckwalze glatt oder gemustert sein. Bei einer gemusterten Walze kann nun den Materialbahnen eine Struktur aufgeprägt werden, die zu einer noch innigeren Verbindung führt. Die Struktur kann eine Noppenstruktur, Waffelstruktur, Linienstruktur oder ein Fantasiemuster sein.

Bei einem anderen Ausführungsbeispiel ist das Gegendruckwerkzeug feststehend und insbesondere als Messer, Klinge oder dergleichen ausgebildet. Dabei erstreckt sich das Messer, die Klinge oder dergleichen in tangentialer Richtung, sodass die Verfestigung oder Verbindung der Materialbahnen miteinander linienförmig erfolgt.

Erfindungsgemäß ist die Spalthöhe zwischen der rotierenden Walze und dem Gegendruckwerkzeug einstellbar. Dabei kann die Einstellung geregelt sein, sodass die Spalthöhe konstant gehalten wird. Insbesondere bei Temperaturänderungen ist dies von Vorteil, da sich die Temperaturänderungen dann nicht in einer Änderung der Spalthöhe niederschlagen.

Bei einer Weiterbildung ist vorgesehen, dass der von der rotierenden Walze auf die Materialbahn ausgeübte Druck einstellbar ist. Insbesondere kann auch eine Druckregelung vorgesehen sein, sodass die Materialbahnen stets mit gleichbleibendem Druck beaufschlagt werden.

Eine bevorzugte Ausführungsform sieht vor, dass die rotierende Walze von einer Hülse mit jeweils einem Stirnzapfen gebildet wird. Eine derart ausgebildete Sonotrode ist zum einen leicht, zum anderen besitzt sie hervorragende Schwingungseigenschaften, da der Schwingungsbauch der Querschwingung bei einer Länge von Lambda-halbe in der Mitte der Hülse liegt.

Vorteilhaft ist die rotierende Walze kühlbar oder heizbar. Hierdurch kann gezielt Wärme ausgetragen oder eingetragen werden, wodurch Schweißbedingungen konstant gehalten werden können.

Bei einem bevorzugten Ausführungsbeispiel ist vorgesehen, dass am Gegendruckwerkzeug wenigstens zwei rotierende Walzen anliegen, die hintereinander geschaltet sind, wobei insbesondere die beiden hintereinandergeschalteten Walzen um einen Betrag (Δ1) in Achsrichtung zueinander versetzt sind. Hierdurch kann auf einfache Weise der Energieeintrag erhöht und die Verteilung der Energie verbessert werden. Mit Vorzug beträgt dabei der Betrag (Δ1) einer Lambda-viertel Welle der aufgezwungenen Schwingung (Δ1 = λ/4).

Eine weitere Maßnahme zur Vergleichmäßigung der Druckverteilung ist, dass die Achse der rotierenden Walze und der Gegendruckwalze windschief zueinander stehen.

Weiter Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung dargestellten und in den Ansprüchen sowie in der Beschreibung erwähnten Merkmale jeweils einzeln für sich oder in beliebiger Kombination erfindungswesentlich sein.

### In der Zeichnung zeigen:

- Figur 1: eine perspektivische Ansicht einer bevorzugten Ausführungsform der Erfindung mit als Gegendruckwalze ausgebildetem Gegendruckwerkzeug;
- Figur 2: einen Schnitt II-II gemäß Figur 1;
- Figur 3: einen Längsschnitt durch die rotierende Walze; und
- Figur 4: eine Seitenansicht der Sonotrode mit Amplitudentransformationsstücken;
- Figur 5: ein Schaubild, die in Querrichtung und in Längsrichtung verlaufenden Schwingungen zeigend;
- Figur 6: eine perspektivische Ansicht einer Ausführungsform mit zwei rotierenden Walzen;
- Figur 7: eine Seitenansicht in Richtung des Pfeils VII gemäß Figur 6;
- Figur 8: eine Ausführungsform mit zwei versetzt zueinander angeordneten rotierenden Walzen;
- Figur 9: eine Seitenansicht einer Ausführungsform mit einer Einschnürungen aufweisenden rotierenden Walze;
- Figur 10: eine Draufsicht auf eine Ausführungsform, bei der die Achsen der rotierenden Walze und der Gegendruckwalze windschief zueinander stehen;
- Figur 11: eine Seitenansicht in Richtung des Pfeils XI gemäß Figur 10; und
- Figur 12: eine Vergrößerte Wiedergabe des Ausschnitts XII gemäß Figur 11.

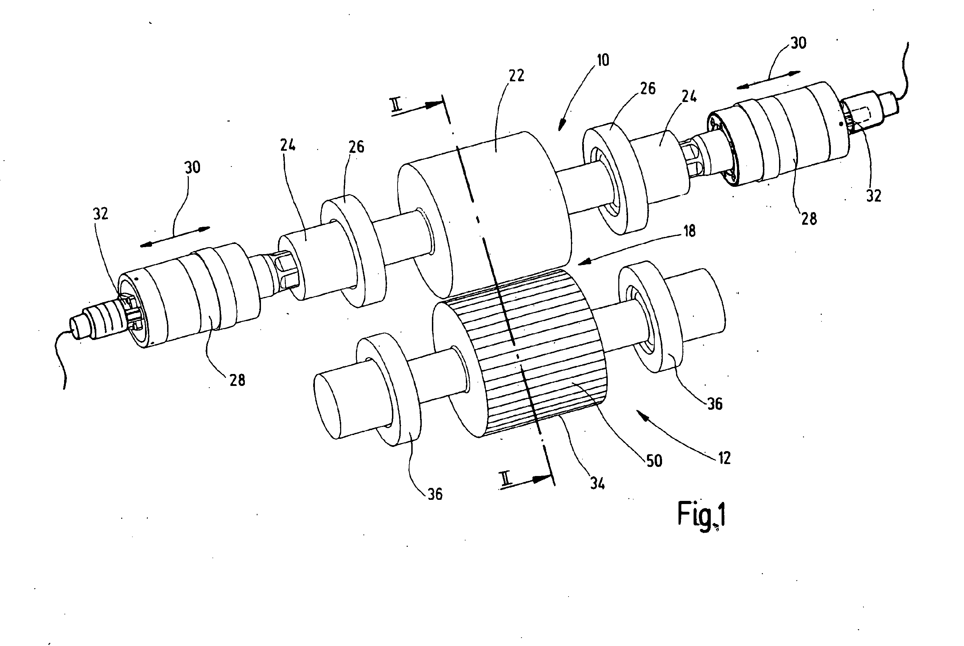

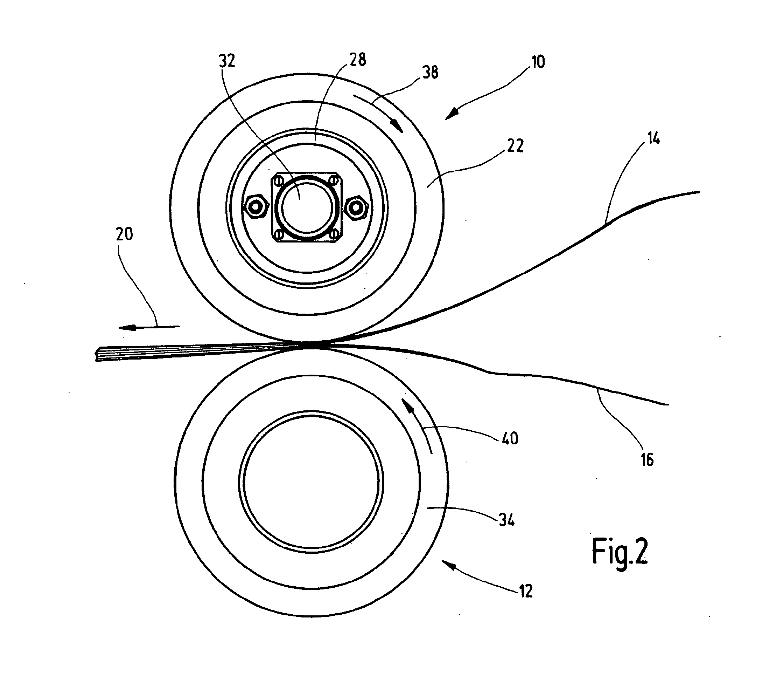

In den Figuren 1 und 2 sind insgesamt mit 10 und 12 zwei rotierende Bauteile erkennbar, zwischen welchen zwei oder mehrere Materialbahnen 14 und 16 hindurchgeführt werden, wobei die beiden Materialbahnen 14 und 16 beim Durchtritt durch einen insgesamt mit 18 bezeichneten Arbeitsspalt miteinander verbunden und/oder verfestigt werden. Die Durchlaufrichtung ist mit dem Pfeil 20 angedeutet.

Das Bauteil 10 weist eine zentrale rotierende Walze 22 auf, an welche sich beidseits Amplitudentransformationsstücke 24 anschließen, an welchen Radiallager 26 vorgesehen sind. Die Amplitudentransformationsstücke 24 sind mit Ultraschallkonvertern 28 gekoppelt, über welche eine mechanische Schwingung in longitudinaler Richtung, das heißt in Richtung des Doppelpfeils 30 erzeugt werden. An den stirnseitigen Enden der Ultraschallkonverter 28 sind Drehkoppler 32 vorgesehen, über welche die Ultraschallkonverter 28 mit Spannung versorgt werden.

Der rotierenden Walze 22 gegenüberliegend ist eine Gegendruckwalze 34 angeordnet, die ebenfalls über Radiallager 36 drehbar gelagert ist. Die Oberfläche der Gegendruckwalze 34 weist in Längsrichtung verlaufende Rippen 50 auf, die der Gegendruckwalze eine Struktur verleihen, die beim Verbinden der beiden Materialbahnen 14 und 16 auf diese übertragen wird.

In der Figur 2 sind mit den Pfeilen 38 und 40 die Drehrichtungen der rotierenden Walze 22 und der Gegendruckwalze 34 angedeutet. Außerdem ist der Drehkoppler 32 erkennbar, über welchen der Ultraschallkonverter 28 mit Spannung versorgt wird.

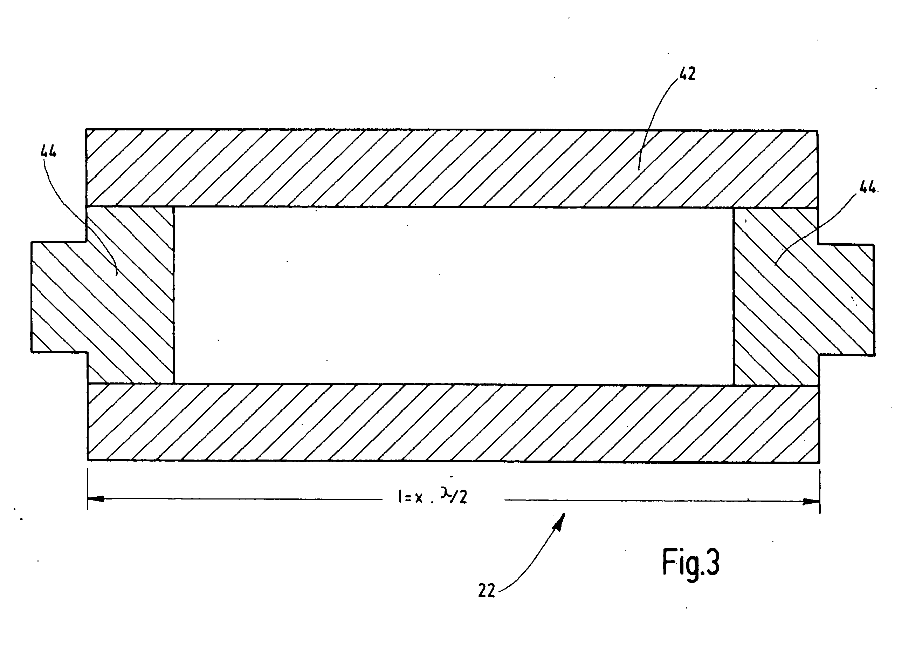

Die Figur 3 zeigt einen Längsschnitt durch die rotierende Walze 22, die beim dargestellten Ausführungsbeispiel von einer Hülse 42 gebildet wird, welche von jeweils einem Stirnzapfen 44 verschlossen ist. An diesen Stirnzapfen 44 schließen sich die (in der Figur 3 nicht dargestellten) Amplitudentransformationsstücke 24 an.

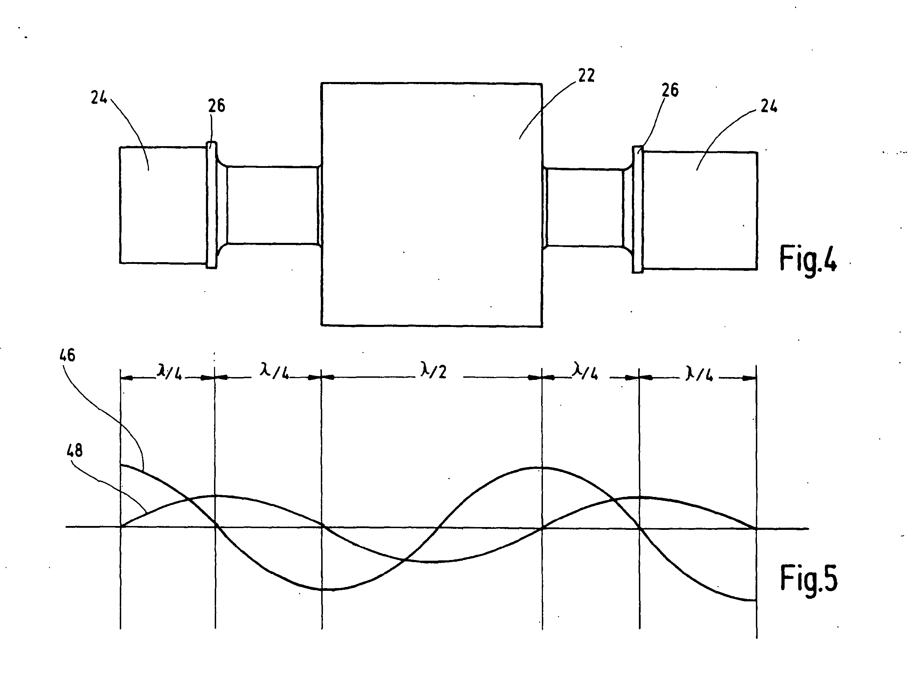

Die Figur 4 zeigt eine Seitenansicht der rotierenden Walze 22 mit den seitlich angeschlossenen Amplitudentransformationsstücken 24 sowie den Radiallagern 26. Beim dargestellten Ausführungsbeispiel entspricht die Länge 1 der rotierenden Walze 22 Lambda-halbe (λ/2) der durch die Amplitudentransformationsstücke 24 aufgezwungenen Schwingung der rotierenden Walze 22. Die beiden Radiallager 26 sind Lambda-viertel (λ/4) von den Stirnseiten der rotierenden Walze 22 entfernt und die beiden Amplitudentransformationsstücke 24 erstreckten sich um Lambda-viertel (λ/4) über die Radiallager 26 hinaus.

Das in Figur 5 dargestellte Schaubild zeigt mit dem Bezugszeichen 46 die Longitudinalschwingung, die von den Amplitudentransformationsstücken 24 erzeugt wird. Um Lambda-viertel (λ/4) versetzt hierzu verläuft die Querschwingung 48, die eine Schwingung der rotierenden Walze 22 in radialer Richtung bewirkt, und mit der der Schweißvorgang durchgeführt wird.

Beim Ausführungsbeispiel der Figur 4 beträgt die Länge 1 der rotierenden Walzen 22 Lambda-halbe (λ/2), wobei die Länge 1 auch ein vielfaches hiervon betragen kann, wie in Figur 3 angedeutet. Auf diese Weise wird die Möglichkeit geschaffen, auch Materialbahn 14 und 16 miteinander zu verbinden, deren Breite größer ist als Lambda-halbe.

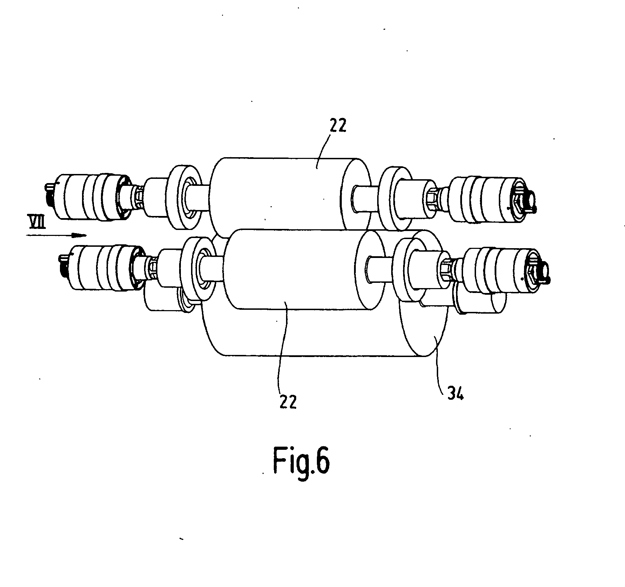

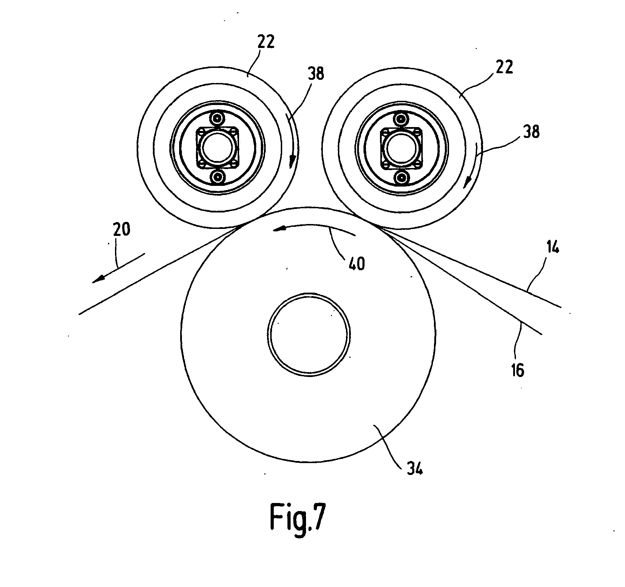

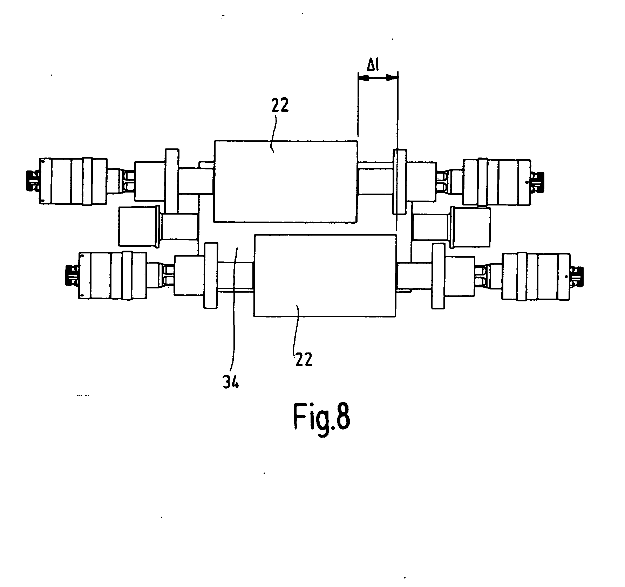

In den Figuren 6 bis 8 sind um die Gegendruckwalze 34 zwei rotierende Walzen 22 angeordnet, wobei die rotierenden Walzen 22 um einen Winkelversatz von 50° bis 60° hintereinander angeordnet und außerdem in axialer Richtung um einen Betrag von Δ1 = λ/4 zueinander versetzt sind, was sich deutlich aus Figur 8 ergibt. Die beiden rotierenden Walzen 22 können identisch ausgebildet sein und werden vom gleichen Frequenzgenerator angetrieben oder schwingen gleichsinnig.

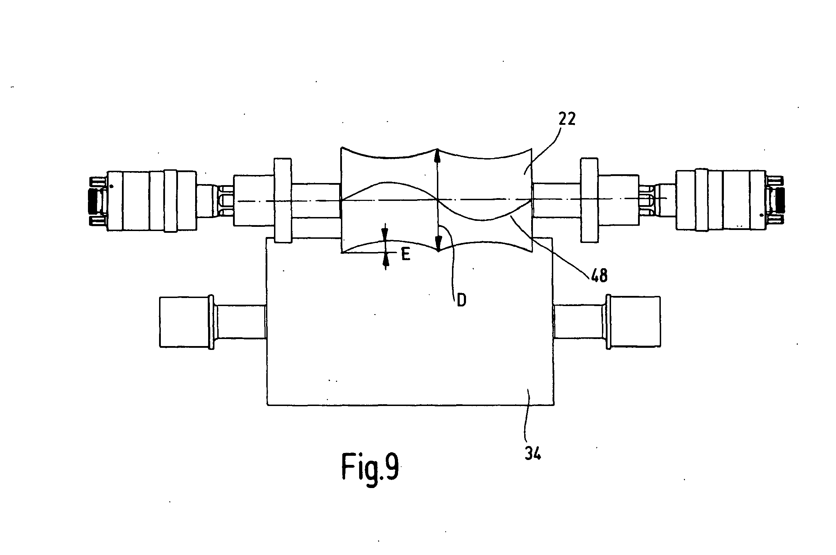

Die Figur 9 zeigt ein Ausführungsbeispiel, bei dem die rotierende Walze 22 eine Einschnürung E aufweist, wodurch der Durchmesser D über die Länge der Walze 22 gezielt reduziert wird. In der Figur 9 ist außerdem die Querschwingung 48 der Walze 22 schaubildlich dargestellt. Es ist erkennbar, dass die Einschnürung E immer dort am größten ist, wo sich ein Schwingungsbauch befindet. Die Einschnürung E ist also betragsmäßig das Produkt aus einer Konstanten und Lambda-halbe (E = |x|·λ/2). Wird die rotierende Walze 22 in Schwingung versetzt, dann nimmt sie zeitweise die Zylinderform an.

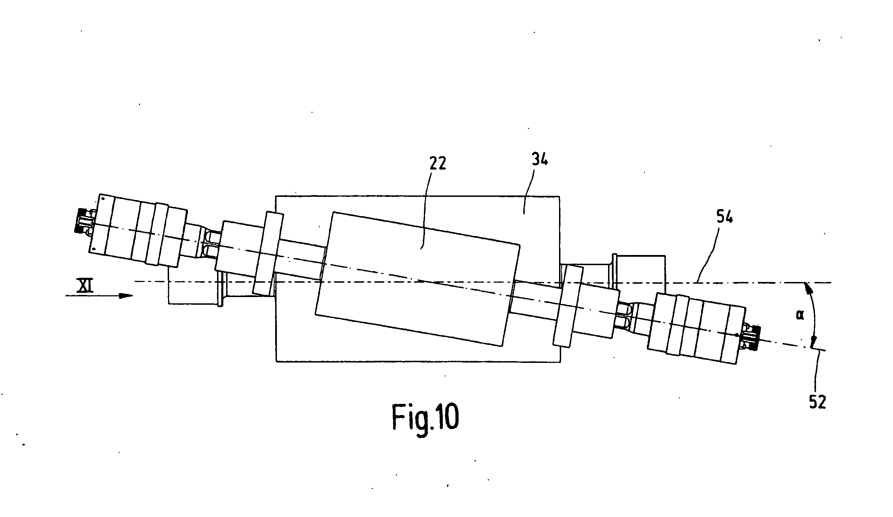

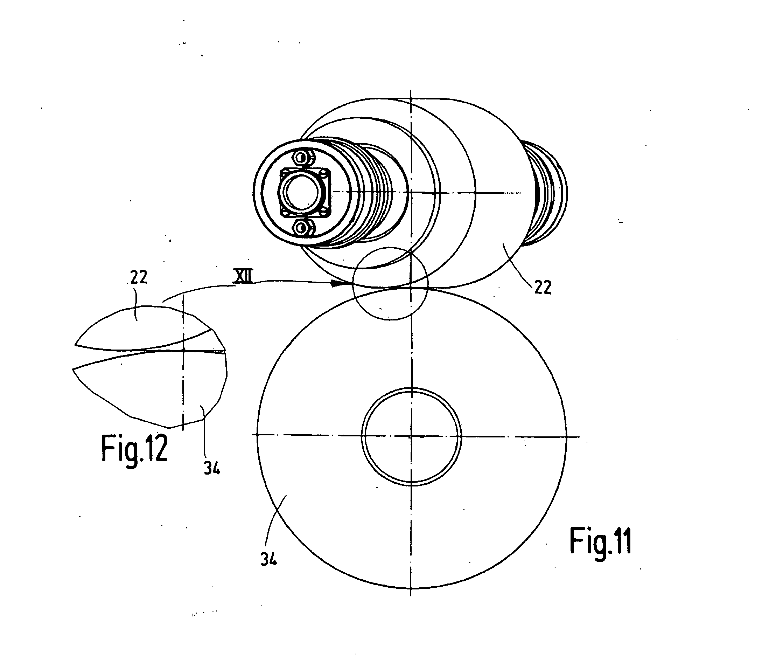

Die Figuren 10 bis 12 zeigen eine weitere Maßnahme, bei der eine der beiden rotierenden Walzen 22 schräg gestellt ist, so dass deren Längsachse 52 windschief zur Längsachse 54 der Gegendruckwalze 34 steht. Der Schrägungswinkel ist in Figur 10 mit α bezeichnet. Der in Figur 11 mit XII gekennzeichnete Ausschnitt ist in Figur 12 vergrößert dargestellt und es ist deutlich erkennbar, dass die Berührungslinie der beiden Walzen nicht achsparallel sondern schräg verläuft. Dadurch kann der Anpressdruck vergleichmäßigt werden.

## Patentansprüche

1. Vorrichtung zum kontinuierlichen Verbinden und/oder Verfestigen von Materialbahnen (14, 16) mittels Ultraschall mit einer als rotierende Walze (22) ausgebildeten Sonotrode, einem der rotierenden Walze (22) radial gegenüberliegenden Gegendruckwerkzeug, einem axial an die rotierende Walze (22) angesetzten Amplitudentransformationsstück (24), und einem sich an das Amplitudentransformationsstück (24) anschließenden Ultraschallkonverter (28) mit einer Spannungsversorgung, **dadurch gekennzeichnet, dass** der Außendurchmesser (D) der rotierenden Walze (22) zumindest teilweise eine Einschnürung (E) aufweist oder im Außendurchmesser derart aufgedickt ist, dass sich eine gleichmäßige Schweißkraftverteilung über deren Länge ergibt, wobei die Einschnürung (E) betragsmäßig einem Teil einer Lambda-halbe Welle der aufgezwungenen Schwingung entspricht (E = |x| · λ/2) und die rotierende Walse im Schwingenden Zustand zeitweise die Zylinderform annimmt.

2. Vorrichtung nach Anspruch 1, **dadurch gekennzeichnet, dass** die Aufdickung von einer Bombage gebildet wird.

3. Vorrichtung nach einem der vorhergehenden Ansprüche, **dadurch gekennzeichnet, dass** die Durchmesseränderung der rotierenden Walze (22) der Biegelinie entspricht.

4. Vorrichtung nach einem der vorhergehenden Ansprüche, **dadurch gekennzeichnet, dass** die Länge (1) der rotierenden Walze (22) einer Lambda-halbe Welle der aufgezwungenen Schwingung oder einem Vielfachen davon entspricht wobei 1 = x · λ/2.

5. Vorrichtung nach einem der vorhergehenden Ansprüche, **dadurch gekennzeichnet, dass** zwischen dem Amplitudentransformationsstück (24) und der rotierenden Walze (22) Radiallager (26) vorgesehen sind.

6. Vorrichtung nach einem der vorhergehenden Ansprüche, **dadurch gekennzeichnet, dass** beidseits der rotierenden Walze (22) ein Amplitudentransformationsstück (24) und ein Ultraschallkonverter (28) vorgesehen sind.

7. Vorrichtung nach einem der vorhergehenden Ansprüche, **dadurch gekennzeichnet, dass** die rotierende Walze (22) von einer Hülse (42) mit jeweils einem Stirnzapfen (44) gebildet wird.

8. Vorrichtung nach einem der vorhergehenden Ansprüche, **dadurch gekennzeichnet, dass** das Gegendruckwerkzeug eine rotierende Gegendruckwalze (34) ist.

9. Vorrichtung nach Anspruch 8, **dadurch gekennzeichnet, dass** die Achsen (52, 54) der rotierenden Walze (22) und der Gegendruckwalze (34) windschief zueinander stehen.

10. Vorrichtung nach einem der vorhergehenden Ansprüche, **dadurch gekennzeichnet, dass** die Außenoberfläche der rotierenden Walze (22) und/oder Gegendruckwalze (34) glatt oder gemustert ist.

11. Vorrichtung nach einem der vorhergehenden Ansprüche, **dadurch gekennzeichnet, dass** die Gegendruckwalze (34) als aktive Walze mit einem Amplitudentransformationsstück (24) und einem sich daran anschließenden Ultraschallkonverter (28) ausgebildet ist.

12. Vorrichtung nach einem der Ansprüche 1 bis 7, **dadurch gekennzeichnet, dass** das Gegendruckwerkzeug feststehend ist und sich in tangentialer Richtung bezüglich der rotierenden Walze (22) erstreckt und insbesondere ein Messer, eine Klinge oder dergleichen ist.

## Claims

1. An apparatus for the continuous bonding and/or consolidating of web materials (14, 16) by ultrasonics having an ultrasonic horn configured as a rotating roller (22), an anvil disposed radially opposite the rotating roller (22), an amplitude transformer (24) mounted axially on the rotating roller (22), and an ultrasonic converter (28) attached to the amplitude transformer (24) with an energy supply, **characterized in that** the outer diameter (D) of the rotating roller (22) at least partially has a constriction (E) or the outer diameter (D) has a local increase of thickness, such that the welding force is equally distributed along its length, wherein the constriction (E) as an absolute value equals to one part of a lambda-half wave of the imposed oscillation (E = lxl · λ/2) and the rotating roller (22) temporarily has a cylindrical form during the oscillating state.

2. Apparatus according to claim 1, **characterized in that** the local increase of thickness is established by a swelling.

3. Apparatus according to one of the preceding claims, **characterized in that** the change in diameter of the rotating roller (22) corresponds to the bending line.

4. Apparatus according to one of the preceding claims, **characterized in that** the length (1) of the rotating roller (22) equals to a lambda-half wave of the imposed oscillation or a multiple thereof wherein 1 = n · λ/2.

5. Apparatus according to one of the preceding claims, **characterized in that** radial bearings (26) are disposed between the amplitude transformer (24) and the rotating roller (22).

6. Apparatus according to one of the preceding claims, **characterized in that** an amplitude transformer (24) and an ultrasonic converter (28) are provided on both sides of the rotating roller (22).

7. Apparatus according to one of the preceding claims, **characterized in that** the rotating roller (22) is formed by a hollow shaft (42) with trunnions (44).

8. Apparatus according to one of the preceding claims, **characterized in that** the anvil is a rotating counter-roller (34).

9. Apparatus according to claim 8, **characterized in that** the axes of the rotating roller (22) and the counter-roller (34) are skewed relative to each other.

10. Apparatus according to one of the preceding claims, **characterized in that** the outer surface of the rotating roller (22) and/or of the counter-roller (34) is smooth or patterned.

11. Apparatus according to one of the preceding claims, **characterized in that** the counter-roller (34) is configured as an active roller with an amplitude transformer (24) and an ultrasonic converter (28) attached thereto.

12. Apparatus according to one of claims 1 to 7, **characterized in that** the anvil is fixed and extends in a tangential direction respective to the rotating roller (22) and is particularly a knife, a blade or the like.

## Revendications

1. Appareil pour la liaison et/ou la consolidation en continu de matériaux en bandes (14, 16) par ultrasons, comprenant une sonotrode réalisée sous la forme d'un cylindre rotatif (22), un outil de contre-pression opposé au cylindre rotatif (22) dans le sens radial, un élément de transformation d'amplitude (24) monté axialement sur le cylindre rotatif (22), et un convertisseur d'ultrasons (28) relié à l'élément de transformation d'amplitude (24) avec une source de tension électrique, **caractérisé en ce que** le diamètre extérieur (D) du cylindre rotatif (22) présente au moins en partie un rétrécissement (E) ou **en ce que** le diamètre extérieur présente un épaississement qui assure une distribution uniforme de la force de soudage sur toute sa longueur, la valeur du rétrécissement (E) correspondant à une partie d'une demi-onde lambda de l'oscillation imposée (E = | x | · λ/2) et le cylindre rotatif adoptant temporairement une forme cylindrique à l'état oscillant.

2. Appareil selon la revendication 1, **caractérisé en ce que** l'épaississement est formé par un bombement.

3. Appareil selon l'une des revendications précédentes, **caractérisé en ce que** la variation de diamètre du cylindre rotatif (22) correspond à la courbe de flexion élastique.

4. Appareil selon l'une des revendications précédentes, **caractérisé en ce que** la longueur (1) du cylindre rotatif (22) correspond à une demi-onde lambda de l'oscillation imposée ou à un multiple de celle-ci, soit 1 = x · λ/2.

5. Appareil selon l'une des revendications précédentes, **caractérisé en ce que** des paliers à charge radiale (26) sont prévus entre l'élément de transformation d'amplitude (24) et le cylindre rotatif (22).

6. Appareil selon l'une des revendications précédentes, **caractérisé en ce qu'**il est prévu un élément de transformation d'amplitude (24) et un convertisseur d'ultrasons (28) de chaque côté du cylindre rotatif (22).

7. Appareil selon l'une des revendications précédentes, **caractérisé en ce que** le cylindre rotatif (22) est formé par un manchon (42) qui comporte un tourillon (44) à chaque extrémité.

8. Appareil selon l'une des revendications précédentes, **caractérisé en ce que** l'outil de contre-pression est un cylindre rotatif antagoniste (34).

9. Appareil selon la revendication 8, **caractérisé en ce que** les axes (52, 54) du cylindre rotatif (22) et du cylindre antagoniste (34) présentent un gauchissement l'un par rapport à l'autre.

10. Appareil selon l'une des revendications précédentes, **caractérisé en ce que** la surface extérieure du cylindre rotatif (22) et/ou du cylindre antagoniste (34) est lisse ou structurée.

11. Appareil selon l'une des revendications précédentes, **caractérisé en ce que** le cylindre antagoniste (34) est réalisé sous la forme d'un cylindre actif comprenant un élément de transformation d'amplitude (24) et un convertisseur d'ultrasons (28) relié à ce dernier.

12. Appareil selon l'une des revendications 1 à 7, **caractérisé en ce que** l'outil de contre-pression est fixe et s'étend dans une direction tangentielle par rapport au cylindre rotatif (22) et est en particulier un couteau, une lame ou un élément similaire.
